# EUROPÄISCHE PATENTSCHRIFT

(11) **EP 1 572 489 B1**
(45) Veröffentlichungstag und Bekanntmachung des Hinweises auf die Patenterteilung: **14.04.2010**
(21) Anmeldenummer: 03813893.9
(22) Anmeldetag: 16.12.2003
(51) Int. Cl.: B60K 23/08, B60K 17/35

(54) **VERFAHREN ZUM STEUERN EINER SCHALTBAREN KUPPLUNG IN EINEM ANTRIEBSSTRANG EINES KRAFTFAHRZEUGS MIT VIERRADANTRIEB**
METHOD FOR CONTROLLING A SHIFTABLE CLUTCH IN THE DRIVE TRAIN OF A 4-WHEEL DRIVE MOTOR VEHICLE
PROCEDE POUR ASSURER LA COMMANDE D'UN EMBRAYAGE COMMUTABLE DANS UNE CHAINE CINEMATIQUE D'AUTOMOBILE QUATRE-QUATRE

(30) Priorität: 20.12.2002 DE 10260196
(43) Veröffentlichungstag der Anmeldung: 14.09.2005
(73) Patentinhaber: Bayerische Motoren Werke Aktiengesellschaft, 80809 München (DE)
(72) Erfinder: HOPPER, Thomas, 80796 München (DE)
(86) Internationale Anmeldenummer: PCT/EP2003/014345
(87) Internationale Veröffentlichungsnummer: WO 2004/058532

(56) Entgegenhaltungen:
- EP-A- 0 393 596
- US-A- 5 461 568
- US-A- 6 047 231

## Beschreibung

Die vorliegende Erfindung betrifft ein Verfahren zum Steuern einer schaltbaren Kupplung in einem Antriebsstrang zwischen einer Vorderachse und einer Hinterachse eines Kraftfahrzeugs mit Vierradantrieb nach dem Oberbegriff des Patentanspruchs 1.

Derartige Verfahren sind beispielsweise aus der EP-A-0 393 596 und der US-A-5 461 568 bekannt.

Es ist aus dem Stand der Technik für allradgetriebene Kraftfahrzeuge bekannt, dass in einer Bauart von Allradfahrzeugen eine Achse permanent angetrieben ist und die jeweils zweite Achse an diesen Antriebsstrang quasi angehängt, bzw. als sog. Hang-on-System ausgebildet ist. In einem bekannten Anwendungsfall wird die Hinterachse permanent angetrieben und die Vorderachse als Hang-on-System zugeschaltet. Dazu ist dass Mitteldifferential in einem Antriebsstrang des Fahrzeugs durch eine schaltbare Kupplung ersetzt, mit welcher hier die Vorderachse an die Hinterachse angekoppelt werden kann.

In der Ansteuerung der schaltbar ausgeführten Kupplung durch eine Steuergerätelogik werden nach dem Stand der Technik Reifenumfangsabweichungen zwischen den Achsen nicht berücksichtigt. Sind Reifenumfangsabweichungen zwischen Vorder- und Hinterachse vorhanden, kommt es in einem Allrad-Betriebsfall bzw. bei einer starren Kopplung der Achse zu einem Verspannen des gesamten Antriebsstranges. Es werden die Bauteile, wie Antriebs-, Gelenkwellen und Differentiale höher belastet. Dementsprechend müssen alle beteiligten Komponenten für größere Belastungen ausgelegt werden, als dies im Rahmen von Grenzbelastungen eines dementsprechenden Fahrzeugs ohne die durch Reifenumfangsabweichungen hervorgerufenen zusätzlichen Belastungen der Fall wäre. Ferner laufen die Reifen in Schlupf, was erhöhten Abrieb bzw. Verschleiß an den Laufflächen bedeutet.

Analog stellt sich die Situation bei Systemen mit einer Hinterachse als Hang-on-System dar. Die nachfolgend unter Bezug auf ein Ausführungsbeispiel der Erfindung dargestellten Zusammenhänge für zu kleine Durchmesser der Räder an der Vorderachse eines Vorderachs-Hang-on-Systems ergeben sich dann bei einer Hinterachs-Hang-on-Anordnung bei zu kleiner Hinterachse und umgekehrt. Aufgrund dieser einfachen Zusammenhänge zwischen den beiden verschiedenen Hang-on-Systemen wird sich im Rahmen der vorliegenden Darstellung ohne Ausschluss nur noch auf ein Vorderachs-Hang-on-System bezogen.

Ein wesentlicher Nachteil des Standes der Technik besteht insbesondere darin, dass ein Verspannen des Antriebsstranges mit den vorstehend nur exemplarisch aufgeführten Nachteilen durch Ausführung eines starren Allradantriebes billigend in Kauf genommen wird. Alternativ wird beispielsweise gemäß der Lehre der DE 37 21 626 C2 und der DE 197 06 720 A1 zur Lösung einer starken Verspannung im Antriebsstrang die schaltbare Kupplung einfach geöffnet. Damit wird zwar jede aufgebaute Verspannung ausgeglichen, das Fahrzeug besitzt dann aber mindestens für die Dauer dieses Ausgleichsvorganges keine Allrad-Eigenschaften mehr. Das bedeutet, dass sich das Fahrzeug schlagartig und für einen Fahrer in fast unvorhersehbarer Weise in diesem Zustand vielmehr wie ein rein Heck- oder Frontgetriebenes Kraftfahrzeug verhält. Je nach vorliegendem Betriebsfall kann sich dieser abrupt einsetzende Vorgang derart negativ auf das Fahrverhalten eines Fahrzeuges auswirken, dass das Fahrzeug hierdurch bedingt sogar instabil werden kann.

Es ist die Aufgabe der vorliegenden Erfindung, ein Verfahren zum Steuern einer schaltbaren Kupplung in einem Antriebsstrang zwischen einer Vorderachse und einer Hinterachse eines Kraftfahrzeugs mit Vierradantrieb und eine dementsprechende Vorrichtung mit verbesserter Verfügbarkeit einer vollen Vierradantriebscharakteristik mit einer dementsprechenden Sicherung der Fahrdynamik des betreffenden Gesamtfahrzeugs zu schaffen.

Die Aufgabe wird erfindungsgemäß durch die Merkmale der jeweiligen unabhängigen Ansprüche 1 und 14 gelöst. Vorteilhafte Weiterbildungen der Erfindung sind in den jeweiligen Unteransprüchen gekennzeichnet.

Ein erfindungsgemäßes Verfahren zeichnet sich demnach dadurch aus, dass die Kupplung über eine Vorsteuermaßnahme einstellbar stets mit Moment beaufschlagt wird. Dieses Moment ist hinsichtlich seiner Größe an der schaltbaren Kupplung selber oder beispielsweise an einer steuernden Hydraulikeinrichtung einstellbar.

Dieser Erfindung liegt die Erkenntnis zugrunde, dass auch bei Raddurchmesserabweichungen und daraus resultierenden Verspannungen in einem Antriebsstrang eines allradgetriebenen Fahrzeugs ein vollkommener Momentenausgleich nicht erforderlich ist. Es wird daher im Rahmen einer Reifentoleranzlogik ein Moment bestimmt, mit dem der Antriebsstrang jeweils verspannt sein darf. Um dieses Moment darstellen zu können, wird die Kupplung in geeigneter Weise im Zuge der Reifentoleranzlogik angesteuert. Die Kupplung bleibt damit während des Fahrbetriebes im wesentlichen stets geschlossen. Es kann folglich unter voller Nutzung der vorteilhaften Eigenschaften eines Allradantriebs in einer Weiterbildung der Erfindung in jedem Fahrdynamikbereich stets eine erwünschte Momentenverteilung innerhalb des Antriebsstrangs auf eine Vorderachse und eine Hinterachse realisiert werden, wobei im normalen Einsatzfall während der Fahrt ein Öffnen der Kupplung insbesondere zum Zwecke eines Momentenausgleichs innerhalb eines verspannten Antriebsstranges vermieden wird. Ein nach einem erfindungsgemäßen Verfahren betriebenes Kraftfahrzeug kann dementsprechend im Gegensatz zu bekannten Fahrzeugen durch den permanenten Einfluss der schaltbaren Kupplung unter deutlicher Begrenzung von Schlupf und anderen negativen Erscheinungen mit einem im wesentlichen permanent wirkenden Allradantrieb und hoher Fahrzeugstabilität betrieben werden.

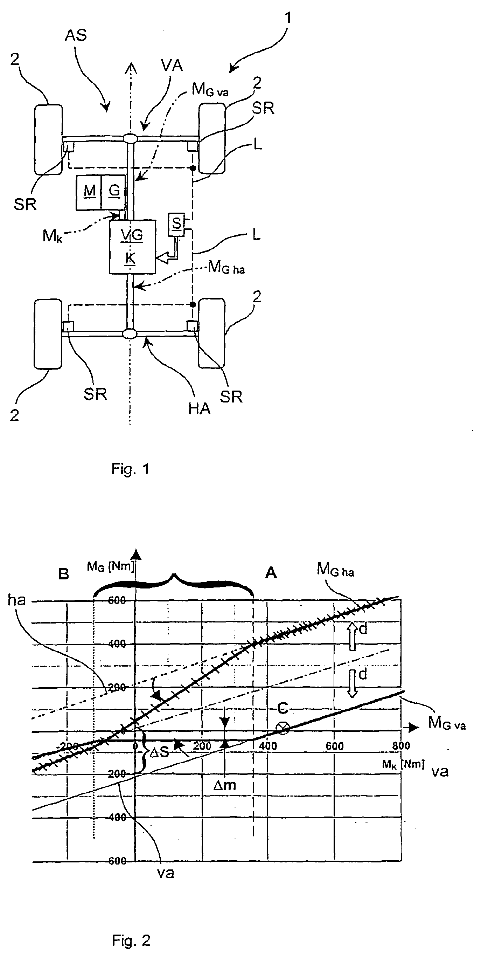

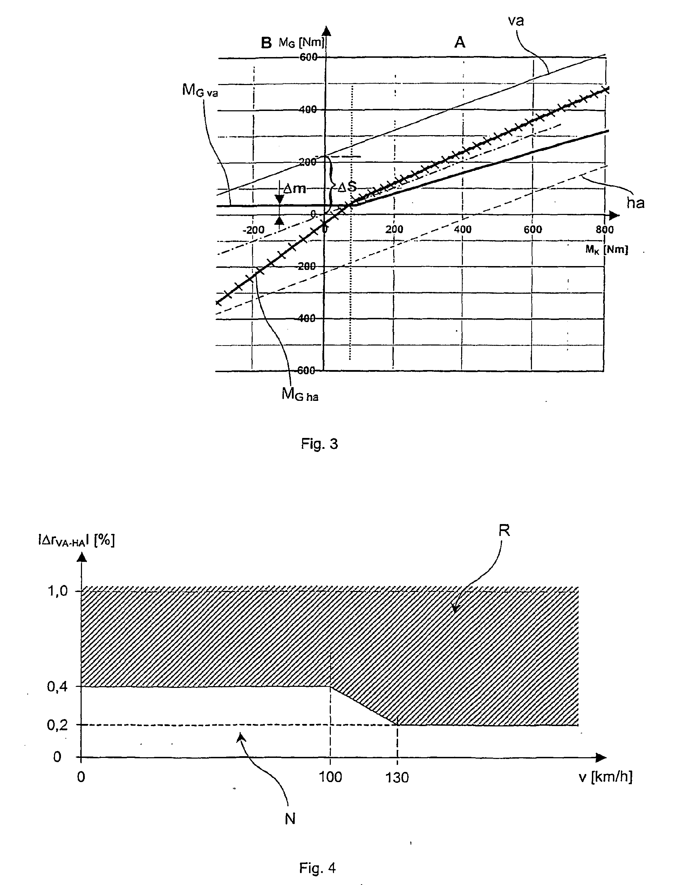

Ist die Vorderachse zu klein, so läuft diese in einem Antriebsstrang nach dem Stand der Technik nach einem Konzept mit starrer Kopplung der Achsen bei kleinen Motormomenten in einem negativen Moment, wie nachfolgend noch als dünne durchgezogene Linie VA in der Abbildung von Figur 2 der Zeichnung dargestellt. Analog ist bei einer zu kleinen Hinterachse an dieser mit negativem Moment zu rechnen, wie als dünne Strichellinie ha in Figur 3 dargestellt. Die Antriebsmomentenverteilung wird von Reifenabweichungen und Motormoment, präziser jedoch von einem jeweiligen Kardanmoment abhängig, was die Fahrdynamik erheblich beeinträchtigt. Analoges gilt bei zu kleiner Hinterachse. In einem geeigneten neutralen Fahrzustand, beispielsweise bei ungebremster, ungetriebener Fahrt ohne Kurven und ohne Eingriff einer Fahrdynamikregelung bzw. einer DSC-Regelung, werden anhand der Radgeschwindigkeiten oder Drehzahlabweichung die Reifenabweichungen zwischen Vorder- und Hinterachse ermittelt. In dieser Ausführungsform wird demzufolge die Kupplung nur kurzzeitig hierzu geöffnet. Damit lernt das System dann in Form der mittleren Radungleichheit zwischen den Achsen die jeweiligen Bedingungen, auf die ein abgestimmtes Regelungskonzept mit dem Ziel angewendet wird, das Hang-on-System als permanenten Allradantrieb ohne Schlupf am Rad wirksam werden zu lassen.

Die Vorgabe des Kupplungsmomentes als Vorsteuerung erfolgt in einer Ausführungsform der Erfindung hauptsächlich durch die Fahrpedalstellung und ist so ausgebildet, dass sich das Fahrzeug nahe dem vollgesperrten Bereich bewegt, d.h. in guter Näherung das Verhalten eines starren Allrad-Antriebes zeigt. Liegen in diesem Fall Radungleichheiten vor, so entsteht ein Verspannmoment, das dem idealen Momentenverlauf an den beiden Achsen überlagert ist, so dass sich ohne Eingriff eines erfindungsgemäßen Verfahrens Verläufe teilweise sehr nachteilhaft wirkende Summenverläufe ergeben. Hier greift die Reifentoleranzlogik ein, indem die Vorsteuerung entsprechend reduziert wird. Zu beachten ist hierbei einerseits die Art des Verspannungszustandes und/oder welche Achse einen kleineren Abrollumfang aufweist, andererseits der Lastzustand, der sich aus dem Vorzeichen des wirksamen Kardanmomentes als Schlepp- oder den Antriebsmodus ergibt. Im Fall einer im Vergleich zu der Hinterachse zu kleinen Vorderachse wird im Antriebsfall bei von Null aus ansteigendem Kardanmoment die Vorsteuerung durch die Reifentoleranzlogik auf ein toleriertes Verspannungsmoment beschränkt. Für Kardanmomente kleiner Null, d.h. im Schleppfall, beschränkt die Reifentoleranzlogik die Vorsteuerung auf einen Anteil des Kardanmomentes. So kann trotz vorhandener Reifenumfangsabweichung eine gewünschte optimale Verteilung des Schleppmomentes auf die Achsen erreicht werden. Im Fall einer zu kleinen Hinterachse ergeben sich punktsymmetrische gespiegelte Momentenkurven, so dass nur die Regelaufgaben zwischen Antrieb und Schleppfall getauscht werden. Diesen Situationen der Fahrdynamik entsprechend wird unter Einwirkung der Reifentoleranzlogik das auf die Kupplung einwirkende Moment festgelegt, wie nachfolgend noch unter Bezug auf Diagramme einer konkreten Ausführungsform der Erfindung mit in vorteilhafter Weise stetigem Kurvenverlauf näher erläutert werden wird.

In einer vorteilhaften Weiterbildung der Erfindung greift die Reifentoleranzlogik jedoch erst dann aktiv ein, wenn die Abweichung zwischen Vorder- und Hinterachse eine tote bzw. eingriffsfreie Zone verlässt, die nach einer Weiterbildung der Erfindung geschwindigkeitsabhängig ausgewählt wird.

Das System synchronisiert hierbei die Achsgeschwindigkeiten, indem es die Vorderachse und die Hinterachse über das Verteilergetriebe derart miteinander kuppelt, dass mindestens eine gemeinsame mittlere Geschwindigkeit der Achsen auch im Fall von Reifenabweichungen eingestellt wird. In der Ansteuerung der Kupplung werden nach den vorstehend beschriebenen Merkmalen in Ausführungsformen der vorliegenden Erfindung in Form einer Steuergerätelogik Reifenumfangsabweichungen zwischen den Achsen entsprechend einer Reifentoleranzlogik durch die Bestimmung eines tolerierbaren Differenzmomentes in der steuerbaren Kupplung berücksichtigt. In einer Ausführungsform der Erfindung wird dazu eine Messung der Drehzahlen von Vorder- und Hinterachse im neutralen Geradeauslauf und bei kurzzeitig geöffneter Kupplung durchgeführt, wie bereits beschrieben. Im Unterschied zu Verfahren nach dem Stand der Technik wird die Allradcharakteristik damit garantiert nur außerhalb eines Zustandes aufgehoben, der zu einer Form der Instabilität des Fahrzeugfahrverhaltens o.ä. neigen könnte. Zudem dauert diese Phase mit einem Verlust der Allradcharakteristik nur sehr kurzzeitig an, und es bedarf zudem nach dem Erlernen der Radungleichheit in einem Fahrtabschnitt keiner Wiederholung der Messung. Auf der Basis der mittleren Drehzahldifferenzen der Vorder- und Hinterachse wird ein sich einstellendes Verspannungsmoment für den Fall einer überspannten bzw. fest geschlossenen Kupplung oder aber eine Raddurchmesserabweichung bestimmt.

Ein Verfahren der vorstehend beschriebenen Art baut auf einer Betrachtung der sich aufgrund der festgestellten Raddurchmesserabweichungen einstellenden Momentenverhältnisse bei einem normierten hohen Reibwert des Straßenuntergrundes auf. In einer alternativen Ausführungsform wird ein erfindungsgemäßes Verfahren dahingehend weitergebildet, dass bei dieser Betrachtung jeweils aktuelle Straßen- und Reibwertverhältnisse berücksichtigt werden. Gemäß der vorstehend erläuterten Lehre wird ein Verspannen des Antriebsstranges durch Reifenumfangsabweichungen zwischen Vorder- und Hinterachse wird durch die Reifentoleranzlogik in einem sinnvollen Bereich begrenzt bzw. verlagert. Der Grad einer möglichen Verspannung ist aber von den Reifenumfangsabweichungen und den jeweils aktuellen Reibwertverhältnissen abhängig. Eine Reifentoleranzlogik der erstgenannten Art verbessert die Fahrdynamik eines im wesentlichen permanent allradgetriebenen Fahrzeuge, adaptiert sich aber u.a. nicht an wechselnde Straßenverhältnisse. Es wird hier immer von einem gravierensten Fall - also Sommerreifen auf einem Untergrund mit hohem Reibwert - ausgegangen. Speziell wirkt sich das auf die Bestimmung des charakteristischen Kardanmomentes aus, oberhalb welchem im Fall einer zu kleinen Vorderachse die Vorsteuerung nicht mehr beschränkt wird, um zur Beschleunigung das treibende Moment eben an der Vorderachse zu nutzen. Bei niedrigen Reibwerten könnte die Beschränkung der Vorsteuerung bei deutlich kleineren Kardanmomenten aufgehoben werden, da der Antriebsstrang nicht so stark verspannt wie auf Hochreibwert.

Als Eingangsgrößen für die Reifentoleranzlogik sind die Reifenabweichungen der einzelnen Räder erforderlich. Diese werden bei dem erstgenannten Messverfahren in geeigneten Fahrzuständen bei ungebremster, ungetriebener Fahrt ohne Kurve oder Fahrdynamikreglereingriff o.ä. anhand der freien Radgeschwindigkeiten bei geöffneter Kupplung ermittelt. Dies hat den Nachteil, dass die Kupplung zur Bestimmung geöffnet werden muss. Das Öffnen der Kupplung hat wiederum unmittelbar zur Folge, dass das Fahrzeug in diesem Zustand reinen Heckantrieb hat. Ferner geht in diesem Verfahren die Beobachtbarkeit der Reifenabweichungen im normal angestrebten Allrad-Betrieb bei geschlossener Kupplung verloren.

Um diese prinzipiellen Nachteile vollständig zu beseitigen werden in einem alternativen Verfahren in denselben geeigneten Fahrzuständen, wie vorstehend als ungebremst, ungetrieben sowie ohne Kurveneinfluss und/oder Regelungseingriff angegeben, bei speziellen Kupplungsmomenten Drehzahlunterschiede zwischen Vorder- und Hinterachse bestimmt. Auf der Basis von zwei derartigen Wertepaaren können durch Extrapolation sodann mittlere Reifenabweichungen zwischen Vorderachse und Hinterachse sowie ein Verspannungsmoment, das sich in einem übersperrten Zustand der Kupplung einstellt, ermittelt werden. Das Verfahren wird nachfolgend noch im Detail am Beispiel einer 0,6%igen Durchmesserabweichung zwischen Vorder- und Hinterachse unter Bezug auf eine Abbildung beschrieben.

Um eine hohe Genauigkeit in diesem Verfahren zu erreichen werden zur Identifikation verwendete Kupplungsmomente möglichst unterschiedlich groß gewählt, so dass sie eine große Abstützbasis mit sehr deutlichen Drehzahlunterschieden zwischen Vorder- und Hinterachse aufzeigen. Andererseits wird ein minimal gefordertes Kupplungsmoment nicht unterschritten und ein im Antriebstrang maximal toleriertes Verspannmoment nicht überschritten.

Damit wird insgesamt erfindungsgemäß eine Möglichkeit geschaffen, in allen Fahrsituationen einen permanenten Allradantrieb darzustellen, also insbesondere ohne zum Zweck des Ausgleichs eines Verspannungszustandes erzwungene Öffnungen der schaltbaren Kupplung. Auch zur Bestimmung und/oder Überwachung von Reifendurchmesserabweichungen ist ein Öffnen der Kupplung nicht länger erforderlich. In einer bevorzugten Ausführungsform der Erfindung kann damit ganz auf das Öffnen der schaltbaren Kupplung verzichtet werden.

Erfindungsgemäß kommt es damit bei einem Fahrzeug mit Reifenabweichungen zwischen Vorder- und Hinterachse zu einem in jedem Zustand begrenzten und tolerierten Verspannen des Antriebsstranges. Dadurch werden dessen Bauteile, wie z.B. Antriebs-, Gelenkwellen und Differentiale, weniger als im Fall eines permanenten Allradbetriebes mit starrer Achs-Kopplung belastet. Dieses Vorgehen mindert den Verschleiß, verlängert die Lebensdauer und senkt Kosten und Gewicht, da die Dimensionierung entsprechend erfolgen kann. Ein negativer und für einen Fahrer spürbarer Einfluss einer übermäßigen Verspannung des Antriebsstranges auf die Lenkung und das Fahrverhalten wird unterbunden. Ferner wird der Reifenverschleiß minimiert und zugleich das Seitenführungspotential des Fahrzeugs eben nicht gemindert, da keine Radschlüpfe durch übermäßiges Verspannen aufgezwungen werden. Zudem wird durch das Verfahren die Antriebsverteilung innerhalb des Fahrzeugs so beeinflusst, dass sich die Fahrdynamik sowohl bei Antrieb als auch bei Schlepp verbessert.

Eine Ausführungsform der Erfindung wird nachfolgend anhand der Zeichnung näher beschrieben. In der Zeichnung zeigen:
- Figur 1:: eine schematische Darstellung eines Antriebsstranges eines allradgetriebenen Fahrzeugs;
- Figur 2:: ein Diagramm mit einer Darstellung der nach einer ersten Ausführungsform der Erfindung bei zu kleiner Vorderachse auftretenden Momente;
- Figur 3:: ein Diagramm mit einer Darstellung der nach einer zweiten Ausführungsform der Erfindung im Fall einer gegenüber einer Vorderachse zu kleinen Hinterachse im Antriebsstrang auftretenden Momente;
- Figur 4:: eine Darstellung einer Geschwindigkeitsabhängigkeit eines eingriffsfreien und eines regelungsbedürftigen Bereiches und
- Figur 5:: eine Darstellung eines Verfahrens zur reibwertabhängigen Bestimmung eines Drehzahlunterschiedes zwischen einer Vorder- und einer Hinterachse in Abhängigkeit des jeweiligen Kupplungsmoments.

In der Abbildung von Figur 1 ist eine schematische Darstellung eines Antriebsstranges AS eines allradgetriebenen Fahrzeugs 1 wiedergegeben. In dem hier betrachteten Fall eines Vorderachs-Hang-on-Systems wird eine Hinterachse HA durch eine Motor-Getriebeeinheit MG über einen Antriebsstrang AS angetrieben. Über eine schaltbare Kupplung K in einem Verteilergetriebe VG wird eine Vorderachse VA über den Antriebsstrang AS mit der Hinterachse HA verbunden. Die Kupplung K wird dabei über eine Steuereinheit S angesteuert, wobei die Steuereinheit S über Leitungen L mit Drehzahlsensoren SR an den Rädern 2 der Vorderachse VA und der Hinterachse HA verbunden ist. Von der Motor-Getriebeeinheit MG wird ein Kardanmoment M_{K} zur schaltbaren Kupplung K übertragen, die es ihrerseits in die Gelenkwellenmomente M_{G va} der Vorderachse VA und M_{G ha} der Hinterachse HA aufteilt. Die Art und Weise der Ansteuerung der schaltbaren Kupplung K und die Erzeugung und Auswertung der jeweiligen Sensorsignale wird nachfolgend im Detail beschrieben.

Ein großer Nachteil des bisherigen Standes der Technik besteht bei allradgetriebenen Fahrzeugen also darin, dass im Fall von Raddurchmesserabweichungen zwischen Vorderachse VA und Hinterachse HA Verspannungen im Antriebsstrang AS auftreten. Durch ungleichmäßige Abnutzung der Radreifen sind beispielsweise infolge unterschiedlicher Gewichtsverteilungen innerhalb des Fahrzeugs 1 derartige Raddurchmesserabweichungen während des Betriebes jedoch nicht auszuschließen. Dementsprechend müssen auch alle Elemente des Antriebsstranges AS, wie beispielsweise Gelenkwellen und Differenziale, für wesentlich erhöhte Belastungen ausgelegt werden. Einen Ausgleich für die sich im wesentlichen kontinuierlich aufbauende Verspannung des Antriebsstranges AS erfährt das gesamte Antriebssystem erst durch ein während des Fahrbetriebes permanent auftretendes Schlupfen der Räder 2. Dieser Vorgang verursacht im Bereich der Laufflächen der Radreifen 2 jedoch einen erhöhten Verschleiß.

Die Abbildung von Figur 2 stellt ein Diagramm der Momente dar, die nach einer ersten Ausführungsform der Erfindung bei zu kleiner Vorderachse VA auftreten. Das Diagramm verdeutlicht die physikalischen Zusammenhänge innerhalb des Antriebsstranges AS exemplarisch für 0,8% Abweichung der Raddurchmesser. Es werden nachfolgend die Zustände ohne Eingriff einer erfindungsgemäßen Reifentoleranzlogik zuerst dargestellt. Danach wird jeweils ein Einfluss der Reifentoleranzlogik als sinnvolle Alternative zu einem Verzicht auf einen Allradantrieb und in Abgrenzung zu einem starr gekoppelten Allradantrieb dargestellt. Die Reifentoleranzlogik wird dabei im Weiteren als Verfahren aufgefasst, das in der entsprechend ausgebildeten Steuereinheit S des Allrad-Fahrzeuges umgesetzt wird.

Die dünnen Linien va, ha zeigen jeweils das Verhalten bzw. einen Momentenverlauf M_{G} in den Gelenkwellen bei einem übersperrten Fahrzeug bzw. einem Fahrzeug mit übersperrter Kupplung K, das sich gleich wie ein Fahrzeug mit starrem AllradAntrieb verhalten wird. Durch eine Abweichung der Raddurchmesser werden die Momentenverläufe ha für die Hinterachse HA sowie va für die Vorderachse VA äquidistant entlang der Pfeile d um einen bestimmten Betrag gegenüber einer strichpunktiert eingezeichneten Idealkurve verschoben. Diese Verschiebung nimmt unter der Voraussetzung gleicher Reibwertverhältnisse zwischen Straßenoberfläche und Lauffläche der Radreifen 2 bei größerer Radreifendurchmesserabweichung weiter zu. Durch die hier angenommene Abweichung von 0,8% zwischen der Vorderachse VA und der Hinterachse HA kommt es somit insgesamt zu einem Verspannungsmoment ΔS von etwas mehr als 200 Nm im Antriebsstrang AS. Die vergleichsweise kleinere und damit schnell drehende Vorderachse VA wird mit diesem Moment gebremst. Da es sich mit der Kopplung über die Fahrbahn um innere Kräfte bzw. Momente handelt, wird die Hinterachse HA entsprechend angetrieben.

In dem dargestellten Diagramm kennzeichnet die linke Halbebene B einen Brems- oder Schleppzustand, die rechte Halbebene A einen Antriebsfall. Für kleine, positive Kardanmomente M_{K} läuft die Vorderachse VA·ohne einen erfindungsgemäßen Regelungseingriff und bei übersperrter Kupplung K aufgrund der innerhalb des Antriebsstranges AS aufgebauten Verspannung in einem Bereich negativer Momente, siehe Kurve va. Die Hinterachse HA hingegen läuft in übersteigertem Antriebsmoment, siehe Kurve ha. Ab einem charakteristischen Kardanmoment M_{K} = C, das hier bei etwa +400 Nm liegt, wird auch von der Vorderachse VA ein treibendes Moment übertragen. Die in diesem Zustand durch die Reifentoleranzen Δr entstehenden Radschlüpfe verursachen erhöhten Verschleiß an den Radreifen. Zudem mindern sie das Seitenführungspotential des Radreifens und üben damit einen negativen Einfluss auf die Fahrdynamik des Kraftfahrzeugs aus.

In dem in der Darstellung von Figur 2 graphisch wiedergegebenen Fall einer im Vergleich zu der Hinterachse zu kleinen Vorderachse wird im Antriebsfall A bei von Null aus ansteigendem Kardanmoment M_{K} die Vorsteuerung durch die Reifentoleranzlogik auf ein toleriertes Verspannungsmoment Δm beschränkt. Diese Beschränkung wird bis zum Erreichen des sog. charakteristischen Kardanmoments C aufrechterhalten, ab dem auch das Vorderachsmoment M_{G va} dauerhaft positiv wird. Für Kardanmomente M_{K} größer als das charakteristische Kardanmoments C wird die Beschränkung aufgehoben, um das antreibende Moment an der Vorderachse nutzen zu können. Die Reifentoleranzlogik gemäß der Lehre der vorliegenden Erfindung reduziert also die Vorsteuerung der Kupplung auf das tolerierte Verspannmoment Δm soweit und in dem Diagramm von Figur 2 über steigende Kardanmomente gesehen solange, bis ein Bereich um das charakteristische Kardanmoment M_{K} = C erreicht ist. Dieser Abschnitt mit einem an den Verläufen der Gelenkwellenmoment-Kurven M_{G va}, M_{G ha} erkennbaren starken Regelungseingriff über die schaltbare Kupplung K ist durch eine Klammer in Figur 2 verdeutlicht worden. So wird beispielsweise das Gelenkwellenmoment M_{G va} der Vorderachse VA im Lastwechselfall im Zuge des geregelten Eingriffs der Kupplung K von einem negativen Moment von ca. -200 Nm auf einen Wert Δm von hier ca. -50 Nm begrenzt. In gleichem Masse wird in diesem für die Fahrstabilität kritischen Punkt auch das Gelenkwellenmoment M_{G ha} der Hinterachse HA von einem positiven Moment von ca. 200 Nm auf ca. 50 Nm begrenzt. Von der Größe her ist das Kupplungsmoment mit seinem minimalen Wert so gewählt, dass die Kupplung K in Kontakt verbleibt und somit quasi sofort jedes Moment über die Kupplung K einstellbar ist. Damit ist die volle Allradperformance sichergestellt, ohne dass das Fahrzeug bei Konstantfahrt über einen definierten Bereich hinaus verspannt.

Ein jeweiliger Traktionswunsch des Fahrers wird dabei über den Gradienten der Fahrpedalstellung sensiert bzw. über einen Fahrpedalinterpreter festgestellt. Übersteigt der Gradient, und damit eine vom Fahrer erwünschte Beschleunigung eine definierte Schwelle, wird auf die in dieser Situation passende Vorsteuerung für gleiche Reifenumfänge übergegangen bzw. die Beschränkung durch die Reifentoleranzlogik aufgehoben und die Kupplung K wird übersperrt. Die Rückführung auf die Beschränkung erfolgt nicht abrupt, sondern zeitverzögert, was hier durch ein Tiefpassverhalten des Systems realisiert ist. Durch dieses Verfahren wird im Traktionsfall die Kupplung K geschlossen, bevor Schlupf entstehen kann.

Oberhalb des charakteristischen Kardanmomentes M_{K} = C wird die Vorsteuerung nicht mehr beschränkt, um das treibende Moment an der Vorderachse VA voll zu nutzen. Verdeutlicht werden die Zusammenhänge durch die in de Abbildung von Figur 2 im Vergleich zu den Linien va, ha dick dargestellten Verläufen der Gelenkwellenmoment-Kurven M_{G va}, M_{G ha}, die jenseits des Bereiches oberhalb des charakteristischen Kardanmomentes M_{K} = C unter dem Einfluss der Reifentoleranzlogik von den zugehörigen dünnen Linien abweichen.

In Motorschleppfall, der linken Halbebene B des Diagramms von Figur 2, zeigt.das Fahrzeug ohne Eingriff einer Reifentoleranzlogik das durch die dünnen Linien ha, va gekennzeichnete Verhalten: Die Hinterachse HA läuft mit deutlich positivem Moment und würde allein gesehen das Fahrzeug also noch beschleunigen. Nur die Vorderachse VA läuft bereits in negativem Moment, wodurch das Fahrzeug durch die Vorderachse abgebremst werden würde.

Für Kardanmomente kleiner Null, d.h. im Schleppfall B, beschränkt die Reifentoleranzlogik die Vorsteuerung auf einen Anteil x des Kardanmomentes M_{K}. So kann trotz vorhandener Reifenumfangsabweichung eine gewünschte optimale Verteilung des Schleppmomentes auf die Achsen VA, HA erreicht werden. Im vorliegenden Fall beläuft sich dieser Anteil x auf ca. 40%. Das an der Vorderachse VA abgesetzte Schleppmoment wird entsprechend beschränkt, wodurch aufgrund der Momentenbilanz am Verteilergetriebe VG die Hinterachse HA ebenfalls in den Schlepp gezogen wird. Hierbei wird das Kupplungsmoment jedoch nicht kleiner als das tolerierte Verspannungsmoment Δm, um einen stetigen Übergang des Bereiche A und B zu erzielen. Erreicht wird so ein harmonisches Lastwechselverhalten des mit dieser Regelung ausgerüsteten Fahrzeugs. Es stellt sich somit an der Vorderachse VA der Momentenverlauf M_{G VA} und entsprechend der Momentenbilanz am Verteilergetriebe VG, M_{K} = M_{G VA} + M_{G HA}, der Momentenverlauf M_{G HA} an der Hinterachse HA ein.

Die Abbildung von Figur 3 zeigt in Form eines weiteren Diagramms analog der Darstellung von Figur 2 die Gelenkwellenmomente M_{G}, die im Fall einer gegenüber einer Vorderachse VA zu kleinen Hinterachse HA im Antriebsstrang AS auftreten. In dem Diagramm ist wieder exemplarisch eine Abweichung der Raddurchmesser von 0,8% dargestellt. Das resultierende Verspannungsmoment des Antriebsstrangs AS liegt dementsprechend auch hier bei etwa 200 Nm. Die Auswirkung auf die Achsen HA, VA ist invertiert. Die kleine, und daher relativ zur Vorderachse VA schneller drehende Hinterachse HA wird nun gebremst. Die Vorderachse VA wird dagegen getrieben. Die Diagramme der Figuren 2 und 3 verhalten sich also im Wesentlichen wie punktsymmetrische Spiegelungen zueinander.

Im Fall einer zu kleinen Hinterachse beschränkt die Reifentoleranzlogik für Kardanmomente M_{K} größer Null, also im Antriebsfall A, die Vorsteuerung, indem das an die Vorderachse VA gehende Antriebsmoment auf einen Anteil x des Kardanmomentes M_{K} festgelegt wird. Entsprechend der Momentenbilanz am Verteilergetriebe VG setzt so die Hinterachse HA ebenfalls ein antreibendes Moment ab, wie durch die dicke Linien M_{G ha} dargestellt. Die Antriebsmomentenverteilung wird durch Wahl des Parameters x vorgegeben, der hier wiederum ca. 40% beträgt. Dementsprechend wird eine optimale Antriebsverteilung vorgegeben, wobei sich für einen stetigen Übergang zwischen Antrieb A und Schleppfall B auch hier ein minimales Kupplungsmoment Δm zu 50Nm ergibt.

Im Motorschleppfall B wird das Kupplungsmoment im Bereich M_{K} = 0 durch die Steuerung auf einen Wert Δm von ca. 50 Nm beschränkt, um das Schleppmoment an der Hinterachse HA zu reduzieren. Hieraus resultiert an der Vorderachse VA der Momentenverlauf·M_{G VA} und an der Hinterachse HA der Momentenverlauf M_{G HA} entsprechend der Momentenbilanz am Verteilergetriebe VG, Im Zusammenwirken mit einer Motorschleppmomentenregelung ergibt sich so wiederum ein harmonisches Lastwechselverhalten.

Der Einfluss der sich bei Raddurchmesserabweichungen stets im Antriebsstrang AS aufbauenden Verspannungsmomente ist von der Geschwindigkeit des Fahrzeugs abhängig. So besteht bei einer Geschwindigkeit v = 0 sicher kaum Anlass zum regelnden Eingreifen, wohingegen bei einer Geschwindigkeit von v = 100km/h zur Absicherung der Fahrdynamik bereits ein Eingreifen einer erfindungsgemäßen Reifentoleranzlogik sinnvoll sein kann. Ferner ist bei großen Abweichungen der Raddurchmesser bzw. Radiusabweisung Δr der Räder 2 an Vorder- und Hinterachse eher ein Regelungseingriff erforderlich, als dies bei geringen Abweichungen der Fall ist. In der Abbildung von Figur 4 ist exemplarisch ein Zusammenhang von Radiusabweisung Δr über der Geschwindigkeit v dargestellt. Da sich ausweislich der Diagramme der Figuren 2 und 3 die Situationen bei vergleichsweise zu kleinen Vorderachserädern und zu kleinen Hinterachsrädern spiegelbildlich zueinander verhalten, wird nur der Betrag einer Radiusabweisung Δr zwischen den Rädern 2 der Vorderachse VA und Hinterachse HA betrachtet. Verlässt die mittlere Radiusabweisung Δr eine geschwindigkeitsabhängige tote bzw. regelungsfreie Zone N, so wird die Reifentoleranzlogik als Beschränkung der Vorsteuerung aktiv, wie durch den Bereich R angedeutet. Wird also bei einer Geschwindigkeit von v = 100km/h und einer Radiusabweisung Δr von 0,3 keine Regelung durchgeführt, so wird bei einer Geschwindigkeit von v = 130km/h und gleicher Radiusabweisung Δr die Reifentoleranzlogik bereits aktiv sein.

In einem vorstehend beschriebenen ersten Ansatz einer Reifentoleranzlogik werden die frei rollenden Räder 2 der Vorderachse VA und der Hinterachse HA untersucht, um jeweils mittlere Raddurchmesserabweichungen zwischen den Achsen festzustellen. Für diese Messung muss demnach zwingend die Kupplung K mindestens für die kurze Messzeit ganz geöffnet werden, wobei während dieser Messzeit keine Allradcharakteristik des Antriebs zur Verfügung steht und eine vollständig geöffnete Kupplung eine verlängerte Reaktions- bzw. Ansprechzeit beim Schließen aufweist.
Eine sich tatsächlich einstellende Verspannung ist jedoch neben einer mittleren Raddurchmesserabweichung ganz wesentlich von dem Reibwert µ des jeweils aktuellen Untergrundes und den Eigenschaften der Radreifen abhängig. Eine Vorsteuerung in Form der vorstehend dargestellten Reifentoleranzlogik adaptiert sich nicht an wechselnde Straßenverhältnisse. Es wird immer vom gravierensten Fall ausgegangen: Sommerreifen auf Hochreibwert-Unterlage. Speziell wirkt sich das auf die Bestimmung des charakteristischen Kardanmomentes C aus, oberhalb welchem im Fall einer zu kleinen Vorderachse VA die Vorsteuerung nicht mehr beschränkt wird, um das treibende Moment an der Vorderachse VA zu nutzen. Bei niedrigen Reibwerten könnte die Beschränkung der Vorsteuerung bei deutlich kleineren Kardanmomenten aufgehoben werden, da der Antriebsstrang nicht so stark verspannt wie auf Hochreibwert.

Als Eingangsgrößen für die Reifentoleranzlogik sind die Reifenabweichungen der einzelnen Räder erforderlich. Diese werden bei dem erstgenannten Messverfahren in geeigneten Fahrzuständen bei ungebremster, ungetriebener Fahrt ohne Kurve oder Fahrdynamikreglereingriff anhand der freien Radgeschwindigkeiten bei geöffneter Kupplung ermittelt. Dies hat den Nachteil, dass die Kupplung zur Bestimmung geöffnet werden muss. Das Öffnen der Kupplung hat wiederum unmittelbar zur Folge, dass das Fahrzeug in diesem Zustand reinen Heckantrieb hat. Ferner geht in diesem Verfahren die Beobachtbarkeit der Reifenabweichungen im normal angestrebten Allrad-Betrieb bei geschlossener Kupplung verloren.

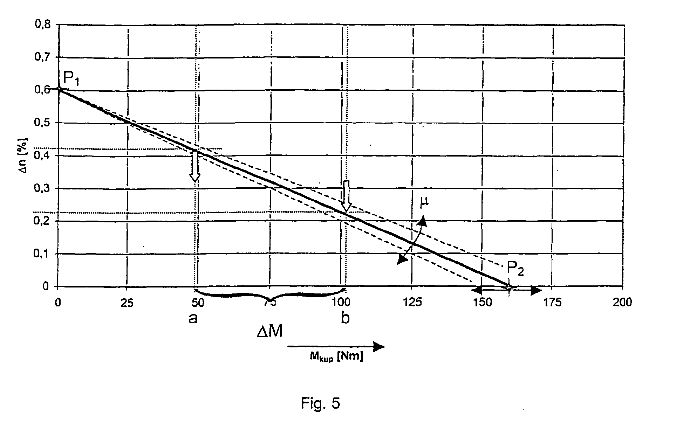

Um diese prinzipiellen Nachteile zu beseitigen werden in einem alternativen Verfahren in denselben geeigneten Fahrzuständen, wie vorstehend als ungebremst, ungetrieben sowie ohne Kurve- und/oder Regelungseingriff angegeben, bei speziellen Kupplungsmomenten reibwertabhängige Drehzahlunterschiede zwischen Vorder- und Hinterachse bestimmt. Die Abbildung von Figur 5 veranschaulicht dieses Verfahren am Beispiel einer 0,6%igen Durchmesserabweichung zwischen den Rädern der Vorder- und Hinterachse: Für voreingestellte Werte des Kupplungsmomentes Mₖᵤₚ werden Wertepaare aus Kupplungsmoment Mₖᵤₚ und Drehzahlabweichung Δn gebildet. Der Drehzahlunterschied zwischen Vorder- und Hinterachse VA, HA ist vom Kupplungsmoment linear anhängig. Zwischen zwei derartigen Wertepaaren von Messpunkten a, b des Kupplungsmomentes Mₖᵤₚ können daher durch lineare Extrapolation dann in P₁, dem Ordinatenabschnitt, die Reifenabweichung Δr zwischen Vorderachse VA und Hinterachse HA und in P₂, dem Schnittpunkt mit der Abszisse, ein Verspannungsmoment ermittelt werden, das sich in einem übersperrten Zustand der Kupplung K in dem Antriebsstrang AS einstellen würde.

Der Punkt P₁ ist als Wert im Normalfall, d.h. ohne zu starken Verschleiß der Radreifen und/oder Druckverlust, fest. Dahingegen ist der Wert P₂ von dem jeweils aktuellen Reibwert µ abhängig, wie in der Darstellung von Figur 5 angedeutet: Bei geöffneter Kupplung, Mₖᵤₚ = 0 Nm, stellt sich der Drehzahlunterschied zwischen Vorderachse VA und Hinterachse HA entsprechend den Reifenabweichungen Δr ein bzw. kann die Abweichung Δr zwischen Vorderachse VA und Hinterachse HA aus dem Drehzahlunterschied Δn abgeleitet werden. Δr ist rein geometrisch bestimmt und damit nicht reibwertabhängig. Die Abnutzung der Reifen geht sehr langsam vor sich, so dass diese Größe ein entsprechend träges Verhalten zeigt, sofern kein Druckverlust am Reifen auf tritt.

Wird das Kupplungsmoment Mₖᵤₚ erhöht, verkleinert sich der Drehzahlunterschied Δn. Die Achsen werden zunehmend synchronisiert. Ab einem speziellen Kupplungsmoment Mₖᵤₚ, das dem maximalen Verspannungsmoment ΔSₘₐₓ entspricht und hier bei etwa 160 Nm liegt, wird der Drehzahlunterschied Δn Null und der Schnittpunkt P₂ mit der Abszisse ist erreicht. Dies ist der Übergang vom teil- in den übersperrten Zustand der Kupplung K. Das maximale Vorspannmoment bzw. Verspannmoment für den übersperrten Zustand ΔSₘₐₓ ist von der Größe der Abweichung zwischen Vorderachse VA und Hinterachse HA, den Achslasten sowie den Reifeneigenschaften und aktuellen Reibwerten abhängig. Die Achslasten sind über Fahrzeuggeometrie und Längsbeschleunigung hinreichend genau bekannt, so dass Reifeneigenschaften und Reibwerte, d.h. die Radschlupfverläufe, als die wesentlichen und unbekannten Einflüsse anzusehen sind.

Die Lage des Schnittpunktes P₂ mit der Abszisse verlagert sich aus der beispielhaft eingezeichneten Lage bei winterlichen Straßenverhältnissen nach links, bei trockenen sommerlichen Straßenverhältnissen und Sommerbereifung des Fahrzeugs nach rechts zu wesentlich höheren µ-Werten. Dementsprechend ändert sich auch die durch die beiden Pfeile d in den Abbildungen der Figuren 2 und 3 dargestellte Parallelverschiebung der Momentenverläufe ha; va: Unter winterlichen Verhältnissen bei schneebedeckter Fahrbahn liegen diese Kurven näher aneinander, unter sommerlichen Bedingungen ist der Abstand d dagegen noch größer. Dementsprechend verschiebt sich bei im Sommer zunehmender und im Winter demgegenüber abnehmender Verspannung des Antriebsstrangs AS das charakteristische Kardanmoment M_{K} = C, bei dessen Überschreitung der regelnde Eingriff auf die Vorsteuerung beendet und die Kupplung K im Bedarfsfall voll gesperrt werden kann.

Durch Einstellung von zwei unterschiedlichen Kupplungsmomenten und Ermittlung der jeweiligen Drehzahlunterschiede in einer geeigneten Fahrsituation ist der Zusammenhang bestimmt, wie oben beschrieben. Die Abweichung Δr sowie das Verspannmoment ΔSₘₐₓ kann durch lineare Extrapolation bestimmt werden.

Um eine hohe Genauigkeit in diesem Verfahren zu erreichen, werden zur Identifikation verwendete Kupplungsmomente Mₖᵤₚ möglichst unterschiedlich groß gewählt, so dass sie eine große Abstützbasis ΔM mit sehr deutlichen Drehzahlunterschieden Δn zwischen Vorderachse VA und Hinterachse HA aufzeigen. Andererseits wird ein minimal gefordertes Kupplungsmoment Δm nicht unterschritten. Bei diesem minimal geforderten Kupplungsmoment Δm von ca. 50 Nm liegen die Lamellen innerhalb der Kupplung noch soweit aneinander an, dass extrem kurze Reaktions- bzw. Ansprechzeiten zum Schalten beliebiger Momente durch die Kupplung realisierbar sind. Ferner wird bei der Auswahl des Punkte b auch ein im Antriebstrang AS maximal toleriertes Verspannmoment nicht überschritten. So ergibt sich ein Bereich möglicher Kupplungsmomente Mₖᵤₚ für einen Identifikationsalgorithmus, oder es werden das minimal geforderte Kupplungsmoment und das maximal tolerierte Verspannmoment und damit das maximale Kupplungsmoment aus diesem Bereich gewählt.

Die Bestimmung der Abweichung Δr zwischen Vorderachse VA und Hinterachse HA ist damit in vorteilhafter Weise im teilgesperrten Zustand möglich. Sie bleibt im teilgesperrten Zustand sogar beobachtbar und überwachbar. Die Kupplung K muss hierfür nicht mehr geöffnet werden, was die Verfügbarkeit des Allradantriebs an einem entsprechend ausgerüsteten Fahrzeug stark erhöht. Eine Veränderung der Abweichung Δr zwischen Vorderachse VA und Hinterachse HA z.B. durch einen Druckverlust am Reifen oder Reifenverschleiss kann bei passender Fahrsituation quasi-kontinuierlich ohne Öffnen der Kupplung erkannt werden. Die Reifentoleranzlogik passt sich entsprechend an.

Aus der Kenntnis des Verspannmomentes ΔSₘₐₓ kann das charakteristische Kardanmoment C, oberhalb welchem im Fall VA zu klein die Vorsteuerung nicht mehr beschränkt wird, abgeleitet werden. Hierdurch kann bei niedrigen Reibwerten die Beschränkung der Vorsteuerung bei deutlich kleineren Kardanmomenten aufgehoben werden. Die Reifentoleranzlogik passt sich z.B. an winterliche Straßenverhältnisse an. Die Vorsteuerung wird nicht in gleichem Maß wie auf Hochreibwert reduziert, sondern adaptiert sich an die Reifeneigenschaften und vorherrschenden Reibwerte d.h. an die entsprechenden Schlupfverläufe. Dies führt zu einer Optimierung der Systemfunktion.

Aus dem Verspannmoment ΔSₘₐₓ, der Abweichung Δr und den Achslasten, welche bekannt sind, ist die Reifenlängssteifigkeit k mit guter Genauigkeit zu bestimmen. Diese repräsentiert nach µ = k*s den linearen Bereich der Radschlupfkurve bzw. gibt den Reibwert zwischen Reifen und Strasse wieder. Diese Information ist grundlegend für alle weiteren analytischen Betrachtungen wie z.B. Berechnung von Vorderachsmoment, Blindmoment etc.

Bei der Kurvenfahrt des Fahrzeugs dreht sich die Vorderachse VA in der Regel aufgrund der sog. Ackermann-Bedingung schneller als die Hinterachse HA. Durch Analogiebetrachtung wird dieser Zustand auf eine Fahrt mit zu kleinen Radreifen an der Vorderachse VA überführt und von der Reifentoleranzlogik entsprechend zur weitgehenden Verhinderung des Antriebsstranges AS auch bei einer Kurvenfahrt behandelt werden. Dabei wird beim Verlassen der toten Zone N gemäß der Abbildung von Figur 4 ein jeweils toleriertes Verspannungsmoment Δm durch eine geeignete Lenkwinkel-abhängige Kennlinie vorgegeben.

Damit wird durch Einsatz eines erfindungsgemäßen Verfahrens die Antriebsverteilung so beeinflusst, dass sich die Fahrdynamik bei permanentem Allradantrieb sowohl bei Antrieb als auch bei Schlepp verbessert.

### Bezugszeichenliste

- 1: allradgetriebenes Fahrzeug
- 2: Rad
- HA: Hinterachse
- MG: Motor-Getriebeeinheit
- AS: Antriebsstrang
- VG: Verteilergetriebe
- K: schaltbare Kupplung als Teil des Verteilergetriebes VG
- VA: Vorderachse
- S: Steuereinheit
- L: Leitungen
- SR: Drehzahlsensor
- M_{K}: Kardanmoment
- M_{G}: Momentenverlauf in den Gelenkwellen
- M_{G va}: Gelenkwellenmoment der Vorderachse VA
- M_{G ha}: Gelenkwellenmoment der Hinterachse HA
- A: Schleppfall
- B: Antriebsfall
- ha: Momentenverlauf für die Hinterachse HA
- va: Momentenverlauf für die Vorderachse VA
- ΔS: Verspannungsmoment
- C: charakteristisches Kardanmoment
- Δm: auf ein toleriertes Verspannmoment reduziertes Kupplungsmoment
- x: vorgegebene Momentenverteilung zwischen VA und HA
- MSR: Motorschleppmomentenregelung
- R: Bereich mit Regelungseingriff
- N: Bereich ohne Regelungseingriff / tote Zone
- v: Geschwindigkeit
- Δr: Radiusabweisung der Räder an Vorder- und Hinterachse
- Δn: Drehzahlabweichung
- Mₖᵤₚ: Kupplungsmoment
- a: Test- bzw. Einstellwert des Kupplungsmoments Mₖ
- b: Test- bzw. Einstellwert des Kupplungsmoments Mₖ
- P₁: Messpunkt
- P₂: Messpunkt

## Patentansprüche

1. Verfahren zum Steuern einer schaltbaren Kupplung (K) in einem Antriebsstrang (AS) zwischen einer Vorderachse (VA) und einer Hinterachse (HA) eines Kraftfahrzeugs (1) mit Vierradantrieb,
bei dem eine Achse direkt angetrieben wird und die andere Achse als Hang-on-System über die Kupplung (K) angekoppelt wird,
wobei die Kupplung (K) über eine Vorsteuermaßnahme einstellbar stets mit Moment beaufschlagt wird,
**dadurch gekennzeichnet, dass** ein Bereich um ein charakteristisches Kardanmoment (C) bestimmt wird, oberhalb welchem im Fall einer zu kleinen Vorderachse die Vorsteuerung nicht mehr beschränkt wird, um zur Beschleunigung das treibende Moment eben an der Vorderachse (VA) zu nutzen.

2. Verfahren nach Anspruch 1,
**dadurch gekennzeichnet, dass** bei einer Kurvenfahrt beim Verlassen der toten Zone (N) ein jeweils toleriertes Verspannungsmoment durch eine geeignete Lenkwinkel-abhängige Kennlinie vorgegeben wird.

3. Verfahren nach Anspruch 1,
**dadurch gekennzeichnet, dass** in einer Reifentoleranzlogik Werte für eine Ungleichheit der Radreifen (2) ermittelt werden, auf deren Grundlage eine Verspannung (ΔS) des Antriebsstranges (AS) bestimmt wird.

4. Verfahren nach einem der vorhergehenden Ansprüche,
**dadurch gekennzeichnet, dass** eine Radreifenungleichheit zwischen Vorderachse (VA) und Hinterachse (HA) in Form einer Reifendurchmesserabweichung (Δr) gemessen werden.

5. Verfahren nach einem der vorhergehenden Ansprüche,
**dadurch gekennzeichnet, dass** Reifendurchmesserabweichung (Δr) ohne Öffnen der Kupplung (K) dadurch bestimmt werden, dass Drehzahlabweichungen (Δn) zwischen Vorderachse (VA) und Hinterachse (HA) bei teilgespannter Kupplung (K) bestimmt werden.

6. Verfahren nach dem vorhergehenden Anspruch,
**dadurch gekennzeichnet, dass** zur Bestimmung der Reifendurchmesserabweichung (Δr) Messungen in zwei Punkten (P₁, P₂) durchgeführt werden.

7. Verfahren nach einem der beiden vorhergehenden Ansprüche,
**dadurch gekennzeichnet, dass** unter Verwendung der Messungen (P₁, P₂) durch lineare Interpolation die Werte an den Grenzen Δn=0 und M=0 bestimmt werden.

8. Verfahren nach einem der drei vorhergehenden Ansprüche,
**dadurch gekennzeichnet, dass** möglichst weit auseinanderliegende Momentenwerte (a, b) der Kupplung (K) für die Messungen (P₁, P₂) genutzt werden.

9. Verfahren nach einem der vorhergehenden Ansprüche,
**dadurch gekennzeichnet, dass** eine Vorsteuermaßnahme unter Vermittlung der Reifentoleranzlogik jedoch erst dann aktiv eingreift, wenn die Abweichung (Δn, Δr) zwischen Vorderachse (VA) und Hinterachse (HA) eine tote bzw. eingriffsfreie Zone (N) verlässt.

10. Verfahren nach dem vorhergehenden Anspruch,
**dadurch gekennzeichnet, dass** die eingriffsfreie Zone (N) abhängig von einer jeweiligen Geschwindigkeit (v) ausgewählt wird.

11. Verfahren nach einem der vorhergehenden Ansprüche,
**dadurch gekennzeichnet, dass** die Regelung auf der Grundlage einer vorgegebenen Momentenverteilung (x) zwischen Vorderachse (VA) und Hinterachse (HA) vorgenommen wird.

12. Verfahren nach dem vorhergehenden Anspruch,
**dadurch gekennzeichnet, dass** eine erwünschte Momentenverteilung (x) zwischen Vorderachse (VA) und Hinterachse (HA) innerhalb des Antriebsstrangs (AS) in bestimmten Fahrdynamikbereichen realisiert wird, insbesondere bei zu kleiner Vorderachse (VA) im Schlepp (B) und/oder bei zu kleiner Hinterachse (HA) im Antriebsfall (A).

13. Vorrichtung zur Steuerung einer schaltbaren Kupplung (K) in einem Antriebsstrang (AS) zwischen einer Vorderachse (VA) und einer Hinterachse (HA) eines Kraftfahrzeugs (1) mit Vierradantrieb,
bei dem eine Achse (VA, HA) direkt angetrieben ist und die andere Achse (HA, VA) über die Kupplung (K) als Hang-on-System ausgebildet ist,
**dadurch gekennzeichnet,**
**dass** die Vorrichtung zur Durchführung eines Verfahrens nach einem oder mehreren der vorhergehenden Ansprüche ausgebildet ist.

14. Vorrichtung nach dem vorhergehenden Anspruch,
**dadurch gekennzeichnet, dass** die Kupplung (K) mit einer Steuereinheit (S) angesteuert,
wobei die Steuereinheit S über Leitungen L mit Drehzahlsensoren SR an den Rädern 2 der Vorderachse VA und der Hinterachse HA verbunden ist.

15. Vorrichtung nach einem der beiden vorhergehenden Ansprüche,
**dadurch gekennzeichnet, dass** die Kupplung (K) Teil eines Verteilergetriebes (VG) ist.

16. Vorrichtung nach einem der beiden vorhergehenden Ansprüche,
**dadurch gekennzeichnet, dass** die Vorsteuermaßnahme durch die Reifentoleranzlogik realisiert und/oder bestimmt ist.

## Claims

1. A method for controlling a shiftable clutch (K) in a drive train (AS) between a front axle (VA) and a rear axle (HA) of a motor vehicle (1) with four-wheel drive, in which one axle is driven directly and the other axle is coupled as a hang-on system by means of the clutch (K), wherein the clutch (K) is continuously acted upon by torque in an adjustable manner by means of a pilot control measure, **characterised in that** a range about a characteristic Cardan torque (C) is determined, above which, when the front axle is too small, the pilot control is no longer limited in order to use the driving torque now at the front axle (VA) for acceleration.

2. A method according to claim 1, **characterised in that** during cornering, when leaving the dead zone (N), a respective tolerated distortion torque can be predetermined by a suitable steering angle-dependent characteristic curve.

3. A method according to claim 1, **characterised in that** values for an inequality of the wheel tyres (2) are determined using a tyre tolerance logic, and, on the basis thereof, a distortion (ΔS) of the drive train (AS) is determined.

4. A method according to any one of the preceding claims, **characterised in that** a wheel tyre inequality between the front axle (VA) and rear axle (HA) is measured in the form of a tyre diameter deviation (Δr).

5. A method according to any one of the preceding claims, **characterised in that** the tyre diameter deviation (Δr) is determined without opening the clutch (K) **in that** rotational speed deviations (Δn) between the front axle (VA) and rear axle (HA) are determined when the clutch (K) is partially tensioned.

6. A method according to the preceding claim, **characterised in that** measurements are carried out at two points (P₁, P₂) to determine the tyre diameter deviation (Δr).

7. A method according to any one of the preceding claims, **characterised in that** the values at the limits Δn = 0 and M = 0 are determined by linear interpolation using the measurements (P₁, P₂).

8. A method according to any one of the three preceding claims, **characterised in that** torque values (a, b) of the clutch (K), which are as far apart as possible, are used for the measurements (P₁, P₂).

9. A method according to any one of the preceding claims, **characterised in that** a pilot control measure is, however, only actively undertaken using the tyre tolerance logic when the deviation (Δn, Δr) between the front axle (VA) and rear axle (HA) leaves a dead or engagement-free zone (N).

10. A method according to the preceding claim, **characterised in that** the engagement-free zone (N) is selected as a function of a respective speed (v).

11. A method according to any one of the preceding claims, **characterised in that** the control is carried out on the basis of a predetermined torque distribution (x) between the front axle (VA) and rear axle (HA).

12. A method according to the preceding claim, **characterised in that** a desired torque distribution (x) between the front axle (VA) and rear axle (HA) is produced within the drive train (AS) in specific driving dynamics ranges, more especially when the front axle (VA) is too small in the case of drag (B) and/or when the rear axle (HA) is too small in the case of drive (A).

13. A device for controlling a shiftable clutch (K) in a drive train (AS) between a front axle (VA) and a rear axle (HA) of a motor vehicle (1) with four-wheel drive, in which one axle (VA, HA) is directly driven and the other axle (HA, VA) is configured as a hang-on system by means of the clutch (K), **characterised in that** the device for carrying out a method is configured according to any one or more of the preceding claims.

14. A device according to the preceding claim, **characterised in that** the clutch (K) is activated by a control unit (S), the control unit (S) being connected by means of lines (L) to rotational speed sensors (SR) on the wheels (2) of the front axle (VA) and the rear axle (HA).

15. A device according to any one of the preceding claims, **characterised in that** the clutch (K) is part of a transfer box (VG).

16. A device according to any one of the preceding claims, **characterised in that** the pilot control measure is implemented and/or determined by the tyre tolerance logic.

## Revendications

1. Procédé de commande d'un embrayage commutable (K) d'une ligne de transmission (AS) entre un essieu avant (VA) et un essieu arrière (HA) d'un véhicule automobile (1) à quatre roues motrices, selon lequel :
- un essieu est entraîné directement et l'autre essieu est couplé par l'embrayage (K) comme système tiré (Hang-on-system),
- l'embrayage (K) reçoit toujours un couple réglable par un moyen de commande amont,
**caractérisé en ce qu'**
on détermine une zone autour d'un couple de cardans (C), caractéristique au-dessus duquel, en cas d'un trop petit essieu avant, la commande amont n'est plus limitée pour utiliser pour l'accélération, le couple moteur au niveau de l'essieu avant (VA).

2. Procédé selon la revendication 1,
**caractérisé en ce qu'**
en cas d'un déplacement en courbe, en quittant la zone morte (N), on prédéfinit un couple de précontrainte respectivement toléré, par une courbe caractéristique appropriée dépendant de l'angle de braquage.

3. Procédé selon la revendication 1,
**caractérisé en ce que**
selon une logique de tolérance des pneumatiques, on détermine des valeurs pour une irrégularité des pneumatiques (2) sur le fondement desquels, on définit une précontrainte (ΔS) de la ligne de transmission (AS).

4. Procédé selon l'une des revendications précédentes,
**caractérisé en ce qu'**
on mesure le déséquilibre des pneumatiques entre l'essieu avant (VA) et l'essieu arrière (HA) sous la forme d'un écart de diamètre de pneumatiques (Δr).

5. Procédé selon l'une des revendications précédentes,
**caractérisé en ce qu'**
on détermine l'écart de diamètre des pneumatiques (Δr) sans ouvrir l'embrayage (K) en déterminant les écarts de vitesse de rotation (Δn) entre l'essieu avant (VA) et l'essieu arrière (HA), pour un embrayage (K) partiellement serré.

6. Procédé selon l'une des revendications précédentes,
**caractérisé en ce que**
on effectue des mesures en deux points (P₁, P₂), pour déterminer l'écart de diamètre des pneumatiques (Δr).

7. Procédé selon l'une des revendications précédentes,
**caractérisé en ce qu'**
on détermine les valeurs aux limites Δn=0 et M=0, avec les mesures (P₁, P₂), par interpolation linéaire.

8. Procédé selon l'une des trois revendications précédentes,
**caractérisé en ce qu'**
on utilise des valeurs de couple (a, b) aussi écartées que possible de l'embrayage (K), pour les mesures (P₁, P₂).

9. Procédé selon l'une des revendications précédentes,
**caractérisé par**
une mesure de commande amont par l'intermédiaire de la logique de tolérance des pneumatiques qui toutefois n'intervient de manière active que si l'écart (Δn, Δr) entre l'essieu avant (VA) et l'essieu arrière (HA) quitte une zone morte ou une zone sans intervention (N).

10. Procédé selon l'une des revendications précédentes,
**caractérisé en ce que**
la zone sans intervention (N) est sélectionnée en fonction d'une vitesse respective (v).

11. Procédé selon l'une des revendications précédentes,
**caractérisé en ce que**
la régulation est faite sur le fondement d'une répartition prédéfinie de couple (x) entre l'essieu avant (VA) et l'essieu arrière (HA).

12. Procédé selon l'une des revendications précédentes,
**caractérisé en ce qu'**
on réalise une répartition souhaitée de couple (x) entre l'essieu avant (VA) et l'essieu arrière (HA) dans la ligne de transmission (AS) dans des plages déterminées de la dynamique de roulage, notamment pour un trop petit essieu avant (VA) en mode de traction (B) et/ou un trop petit essieu arrière (HA) en mode de propulsion (A).

13. Dispositif de commande d'un embrayage commutable (K) dans une ligne de transmission (AS) entre un essieu avant (VA) et un essieu arrière (HA) d'un véhicule automobile (1) à quatre roues motrices, selon lequel
un essieu (VA, HA) est entraîné directement et l'autre essieu (HA, VA) est réalisé comme système tiré par l'intermédiaire de l'embrayage (K),
**caractérisé en ce que**
le dispositif est conçu pour la mise en oeuvre d'un procédé selon l'une ou plusieurs des revendications précédentes.

14. Dispositif selon la revendication précédente,
**caractérisé en ce que**
l'embrayage (K) est commandé par une unité de commande (S), et
l'unité de commande (S) est reliée par des lignes (L) aux capteurs de vitesse de rotation (SR) des roues (2) de l'essieu avant (VA) et de l'essieu arrière (HA).

15. Dispositif selon l'une des deux revendications précédentes,
**caractérisé en ce que**
l'embrayage (K) fait partie d'une boîte de transfert (VG).

16. Dispositif selon l'une des deux revendications précédentes,
**caractérisé en ce que**
le moyen de commande amont est réalisé et/ou déterminé par la logique de tolérance des pneumatiques.
